# EUROPÄISCHE PATENTANMELDUNG

(11) **EP 1 748 206 A2**
(43) Veröffentlichungstag der Anmeldung: **31.01.2007**
(21) Anmeldenummer: 06009006.5
(22) Anmeldetag: 29.04.2006
(51) Int. Cl.: F16D 21/06

(54) **Drehmomentübertragungseinrichtung**

(30) Priorität: 19.05.2005 DE 102005022910
(71) Anmelder: LuK Lamellen und Kupplungsbau Beteiligungs KG, 77815 Bühl (DE)
(72) Erfinder: Friedmann, Oswald, 77839 Lichtenau (DE)

(57) **Zusammenfassung**

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, die drehfest mit einem Ausgangsteil der Antriebseinheit verbunden ist, und einem Getriebe mit zwei Getriebeeingangswellen, die jeweils mit einer Reibbeläge aufweisenden Kupplungsscheibe einer Doppelkupplung drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden ist.

Um eine Vormontage der Doppelkupplung im Getriebe zu ermöglichen, ist zwischen dem Ausgangsteil und der Zwischendruckplatte oder einem Kupplungsdeckel eine Mittenversatzausgleichseinrichtung angeordnet.

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, die drehfest mit einem Ausgangsteil der Antriebseinheit verbunden ist, und einem Getriebe mit zwei Getriebeeingangswellen, die jeweils mit einer Reibbeläge aufweisenden Kupplungsscheibe einer Doppelkupplung drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden ist.

Die beiden Kupplungsscheiben und die damit zusammenwirkenden Reibbeläge bilden eine Doppelkupplung.

Aufgabe der Erfindung ist es, eine Drehmomentübertragungseinrichtung gemäß dem Oberbegriff des Anspruchs 1 zu schaffen, durch welche eine Vormontage der Doppelkupplung im Getriebe ermöglicht wird.

Die Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, die drehfest mit einem Ausgangsteil der Antriebseinheit verbunden ist, und einem Getriebe mit zwei Getriebeeingangswellen, die jeweils mit einer Reibbeläge aufweisenden Kupplungsscheibe einer Doppelkupplung drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden ist, dadurch gelöst, dass zwischen dem Ausgangsteil und der Zwischendruckplatte oder einem Kupplungsdeckel eine Mittenversatzausgleichseinrichtung angeordnet ist. Die Mittenversatzausgleichseinrichtung ermöglicht den Ausgleich eines Mittenversatzes zwischen der Kurbelwelle der Brennkraftmaschine und der Drehachse der Getriebeeingangswellen, wenn die Doppelkupplung im Getriebe vormontiert wird und auch im Getriebe gelagert ist. Durch die erfindungsgemäße Mittenversatzausgleichseinrichtung kann sowohl radialer als auch axialer Versatz ausgeglichen werden. Dadurch kann eine Übertragung von durch die Kurbelwelle erzeugten Axial- und/oder Biegeschwingungen auf die Kupplung verhindert werden. Die Reibbeläge der Kupplungsscheiben sind zwischen der Zwischendruckplatte und Druckplatten angeordnet, die mit Hilfe einer Betätigungseinrichtung in, bezogen auf die Getriebeeingangswellen, axialer Richtung relativ zu der Zwischendruckplatte bewegbar sind, um die Reibbeläge zwischen der Zwischendruckplatte und den Druckplatten einzuklemmen.

Ein bevorzugtes Ausführungsbeispiel der Drehmomentübertragungseinrichtung ist dadurch gekennzeichnet, dass die Mittenversatzausgleichseinrichtung einen Zwischenringkörper umfasst. Der Zwischenringkörper ist vorzugsweise aus Blech gebildet und radial außen in axialer Richtung zwischen dem Ausgangsteil der Antriebseinheit und der Zwischendruckplatte angeordnet.

Ein weiteres bevorzugtes Ausführungsbeispiel der Drehmomentübertragungseinrichtung ist dadurch gekennzeichnet, dass mehrere Befestigungslaschen von dem Zwischenringkörper radial nach außen abgewinkelt sind. Vorzugsweise sind die Befestigungslaschen in einer Ebene angeordnet.

Ein weiteres bevorzugtes Ausführungsbeispiel der Drehmomentübertragungseinrichtung ist dadurch gekennzeichnet, dass eine Blattfedereinrichtung im Wechsel an dem Zwischenringkörper und an der Zwischendruckplatte oder einem Kupplungsdeckel befestigt ist. Vorzugsweise sind die Befestigungslaschen in Umfangsrichtung alternierend an dem Zwischenringkörper und an der Zwischendruckplatte oder einem Kupplungsdeckel befestigt. Die Befestigung erfolgt vorzugsweise mit Hilfe von Nietverbindungen.

Ein weiteres bevorzugtes Ausführungsbeispiel der Drehmomentübertragungseinrichtung ist dadurch gekennzeichnet, dass die Blattfedereinrichtung mindestens einen Blattfederring umfasst. Vorzugsweise umfasst die Blattfedereinrichtung ein mehrlagiges Paket aus Blattfederringen.

Ein weiteres bevorzugtes Ausführungsbeispiel der Drehmomentübertragungseinrichtung ist dadurch gekennzeichnet, dass die Blattfedereinrichtung mehrere im Wesentlichen kreisbogenförmige Blattfederelemente umfasst. Die einzelnen Blattfederelemente liefern den Vorteil, dass sie größere Versätze ausgleichen können. Allerdings werden die einzelnen Blattfederelemente auch auf Knickung beansprucht.

Ein weiteres bevorzugtes Ausführungsbeispiel der Drehmomentübertragungseinrichtung ist dadurch gekennzeichnet, dass mehrere Befestigungslaschen von dem Zwischenringkörper radial nach innen abgewinkelt sind. Vorzugsweise sind die Befestigungslaschen in einer Ebene angeordnet.

Ein weiteres bevorzugtes Ausführungsbeispiel der Drehmomentübertragungseinrichtung ist dadurch gekennzeichnet, dass eine weitere Blattfedereinrichtung im Wechsel an dem Zwischenringkörper und an dem Ausgangsteil befestigt ist. Vorzugsweise sind die Befestigungslaschen in Umfangsrichtung alternierend an dem Zwischenringkörper und an dem Ausgangsteil befestigt. Die Befestigung an dem Zwischenringkörper erfolgt vorzugsweise durch Nietverbindungen. Die Befestigung an dem Ausgangsteil erfolgt vorzugsweise durch Schraubverbindungen.

Ein weiteres bevorzugtes Ausführungsbeispiel der Drehmomentübertragungseinrichtung ist dadurch gekennzeichnet, dass die weitere Blattfedereinrichtung mindestens einen Blattfederring umfasst. Vorzugsweise umfasst die weitere Blattfedereinrichtung ein mehrlagiges Paket aus Blattfederringen.

Ein weiteres bevorzugtes Ausführungsbeispiel der Drehmomentübertragungseinrichtung ist dadurch gekennzeichnet, dass die Blattfedereinrichtung mehrere im Wesentlichen kreisbogenförmige Blattfederelemente umfasst. Die einzelnen Blattfederelemente liefern den Vorteil, dass sie größere Versätze ausgleichen können. Allerdings werden die einzelnen Blattfederelemente auch auf Knickung beansprucht.

Ein weiteres bevorzugtes Ausführungsbeispiel der Drehmomentübertragungseinrichtung ist dadurch gekennzeichnet, dass die weitere Blattfedereinrichtung mit dem Zwischenringkörper verschraubt ist. Dadurch wird auf einfache Art und Weise eine lösbare Verbindung zwischen der vormontierten Kupplung und der Brennkraftmaschine geschaffen.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

Es zeigen:
- Figur 1: eine Drehmomentübertragungseinrichtung im Längsschnitt mit einer erfindungsgemäßen Mittenversatzausgleichseinrichtung;
- Figur 2: die Mittenversatzausgleichseinrichtung aus Figur 1 in einer Seitenansicht;
- Figur 3: eine schematische Darstellung eines Antriebsstrangs eines Kraftfahrzeugs mit einem radialen Versatz zwischen der Rotationsachse einer Kurbelwelle und der Rotationsachse von Getriebeeingangswellen;
- Figur 4: eine schematische Darstellung eines Antriebsstrangs eines Kraftfahrzeugs mit einem radialen Versatz und einer axialen Verschiebung zwischen der Rotationsachse einer Kurbelwelle und der Rotationsachse von Getriebeeingangswellen;
- Figur 5: eine perspektivische Darstellung der Mittenversatzausgleichseinrichtung aus Figur 1;
- Figur 6: einen vergrößerten Ausschnitt aus Figur 1;
- Figur 7: einen weiteren vergrößerten Ausschnitt aus Figur 1;
- Figur 8: eine perspektivische Darstellung eines Ausgangsteils der in Figur 1 dargestellten Antriebseinheit von der Getriebeseite her und
- Figur 9: eine perspektivische Darstellung des Ausgangsteils aus Figur 8 von der Seite der Antriebseinheit betrachtet.

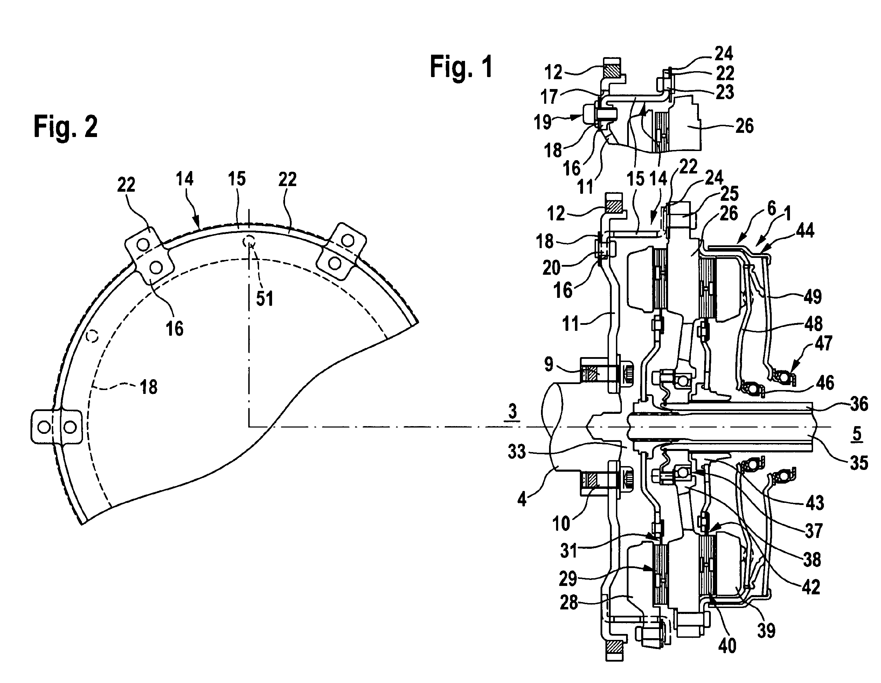

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Doppelkupplung 6 angeordnet. Die Kurbelwelle 4 der Brennkraftmaschine 3 ist über Schraubverbindungen 9, 10 fest mit einem Ausgangsteil 11 der Antriebseinheit 3 verbunden, das gleichzeitig das Eingangsteil der Doppelkupplung 6 bildet. Das Ausgangsteil 11 der Antriebseinheit 3 hat im Wesentlichen die Gestalt einer sich in radialer Richtung erstreckenden Kreisringscheibe, die außen einen zum Getriebe 5 hin abgewinkelten Umfangsrand aufweist. An dem Ausgangsteil 11 ist radial außen ein Anlasserzahnkranz 12 befestigt.

Das Ausgangsteil 11 der Antriebseinheit 3 ist mit Hilfe einer Mittenversatzausgleichseinrichtung 14 drehfest mit einer Zwischendruckplatte 26 der Doppelkupplung 6 verbunden. Die Mittenversatzausgleichseinrichtung 14 umfasst einen Zwischenringkörper 15, der im Wesentlichen die Gestalt eines Kreiszylindermantels aufweist. Von dem Zwischenringkörper 15 ist auf der Antriebsseite eine Befestigungslasche 16 radial nach innen abgewinkelt. Die Befestigungslasche 16 ist in einer Ausnehmung 17 angeordnet, die in dem Ausgangsteil 11 ausgespart ist. An der Befestigungslasche 16 ist ein Blattfederringpaket 18 mit Hilfe einer Schraube 19 lösbar, das heißt zerstörungsfrei trennbar, befestigt. In Umfangsrichtung versetzt zu der Befestigungslasche 16 ist das Blattfederringpaket 18 mit Hilfe einer Nietverbindung 20 an dem Ausgangsteil 11 befestigt. Im Bereich der Nietverbindung 20 ist in Figur 1 die Befestigungslasche gestrichelt angedeutet. Oberhalb des Anlasserzahnkranzes 12 ist ein in Umfangsrichtung versetzter Ausschnitt des Ausgangsteils 11 dargestellt, in dem die Befestigungslasche 16 in der Ausnehmung 17 sichtbar ist.

Darüber hinaus ist auf der Getriebeseite des Zwischenringkörpers 15 der Mittenversatzausgleichseinrichtung 14 eine Befestigungslasche 22 radial nach außen abgewinkelt. An der Befestigungslasche 22 ist mit Hilfe einer Nietverbindung 23 ein Blattfederpaket 24 befestigt. Das Blattfederpaket 24 ist aus mehreren Blattfedern gebildet, die im Wesentlichen die Gestalt von Kreisbögen aufweisen. In Umfangsrichtung versetzt zu der Befestigungslasche 22 ist das Blattfederpaket 24 mit Hilfe einer Nietverbindung 25 an der Zwischendruckplatte 26 befestigt. In Figur 1 ist die Befestigungslasche 22 nur gestrichelt angedeutet, da sie in Umfangsrichtung versetzt angeordnet ist. Etwas oberhalb des Anlasserzahnkranzes 12 ist die Befestigungslasche 22 mit durchgezogenen Linien dargestellt.

Antriebsseitig sind zwischen der Zwischendruckplatte 26 und einer Druckplatte 28 Reibbeläge 29 einer ersten Kupplungsscheibe 31 einklemmbar. Die erste Kupplungsscheibe 31 ist über ein Nabenteil 33 drehfest mit einer ersten Getriebeeingangswelle 35 verbunden, die als Vollwelle ausgebildet ist. Die erste Getriebeeingangswelle 35 ist in einer zweiten Getriebeeingangswelle 36, die als Hohlwelle ausgebildet ist, drehbar angeordnet. An dem antriebsseitigen Ende der zweiten Getriebeeingangswelle 36 ist mit Hilfe eines Wälzlagers 37 ein Nabenteil 38 drehbar gelagert, an dem radial außen die Zwischendruckplatte 26 vorgesehen ist. Getriebeseitig sind zwischen der Zwischendruckplatte 26 und einer Druckplatte 39 Reibbeläge 40 einer zweiten Kupplungsscheibe 42 einklemmbar. Die zweite Kupplungsscheibe 42 ist über ein Nabenteil 43 drehfest mit der zweiten Getriebeeingangswelle 36 verbunden.

Die Doppelkupplung 6 weist ein Kupplungsgehäuse 44 auf, das auch als Kupplungsdeckel bezeichnet wird und an dem die Druckplatten 28, 39 axial verschiebbar drehfest angebracht sind. Außerdem ist die Zwischendruckplatte 26 an dem Kupplungsgehäuse 44 befestigt. Das Kupplungsgehäuse 44 ist über die Zwischendruckplatte 26 und die Mittenversatzausgleichseinrichtung 14 mit dem Ausgangsteil 11 der Antriebseinheit 3 verbunden. Die Doppelkupplung 6 wird in bekannter Art und Weise über Betätigungseinrichtungen 46, 47, die mit Betätigungshebeln 48, 49 zusammenwirken, betätigt.

In Figur 2 ist die Mittenversatzausgleichseinrichtung 14 aus Figur 1 in einer Seitenansicht dargestellt. In der Seitenansicht sieht man, dass sowohl radial nach innen als auch radial nach außen mehrere Befestigungslaschen von dem Zwischenringkörper 15 abgewinkelt sind. Außerdem ist in Figur 2 das Blattfederringpaket 18 gestrichelt angedeutet. Ebenfalls gestrichelt angedeutet ist ein Durchgangsloch 51 in dem Blattfederringpaket 18. Das Durchgangsloch 51 dient zur Aufnahme der Nietverbindung 20 (in Figur 1), mit der das Blattfederringpaket 18 an dem Ausgangsteil 11 der Antriebseinheit 3 befestigt ist.

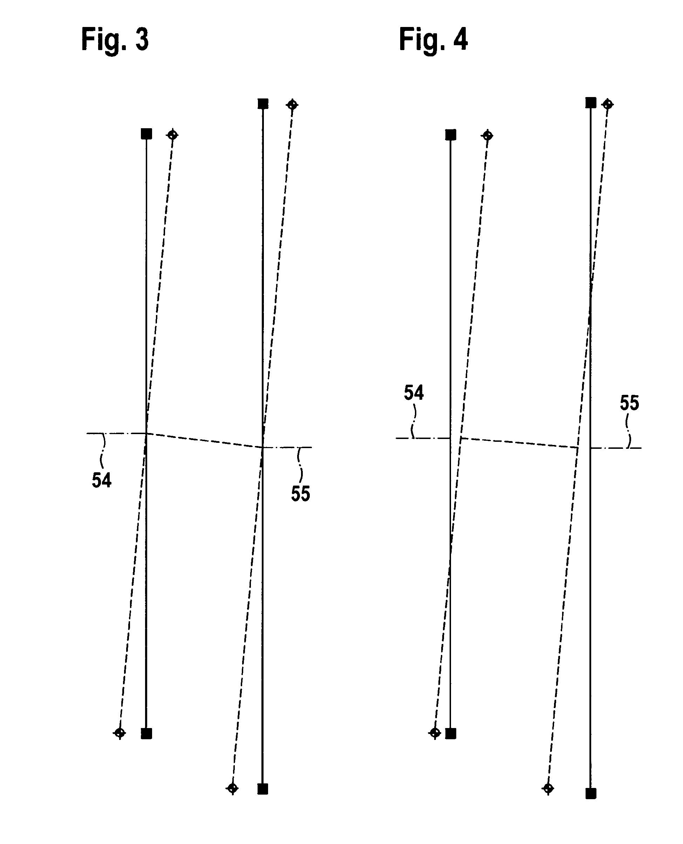

In Figur 3 ist der Antriebsstrang 1 aus Figur 1 schematisch dargestellt. Die Rotationsachse der Kurbelwelle ist mit 54 bezeichnet. Die Rotationsachse der Getriebeeingangswellen ist mit 55 bezeichnet. In Figur 3 sieht man, dass zwischen der Rotationsachse 54 der Kurbelwelle und der Rotationsachse 55 der Getriebeeingangswellen ein radialer Versatz auftreten kann.

In Figur 4 ist angedeutet, dass zusätzlich zu einem radialen Versatz eine Axialverschiebung zwischen der Rotationsachse 54 der Kurbelwelle und der Rotationsachse 55 der Getriebeeingangswellen auftreten kann.

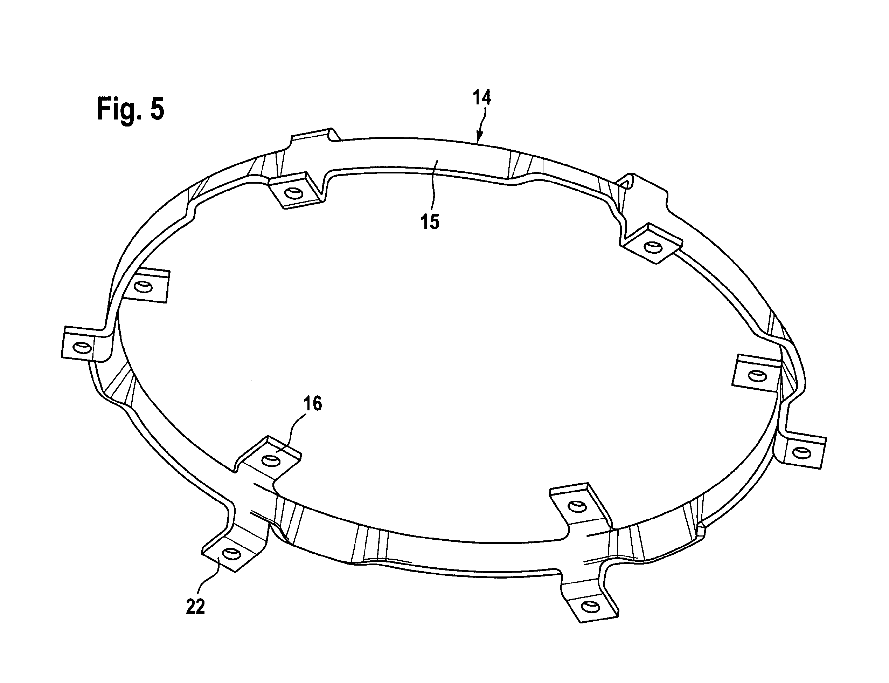

In Figur 5 ist die Mittenversatzausgleichseinrichtung 14 aus Figur 1 alleine perspektivisch dargestellt. In der Perspektive sieht man, dass sechs Befestigungslaschen radial nach innen und weitere sechs Befestigungslaschen radial nach außen von dem Zwischenringkörper 15 abgewinkelt sind.

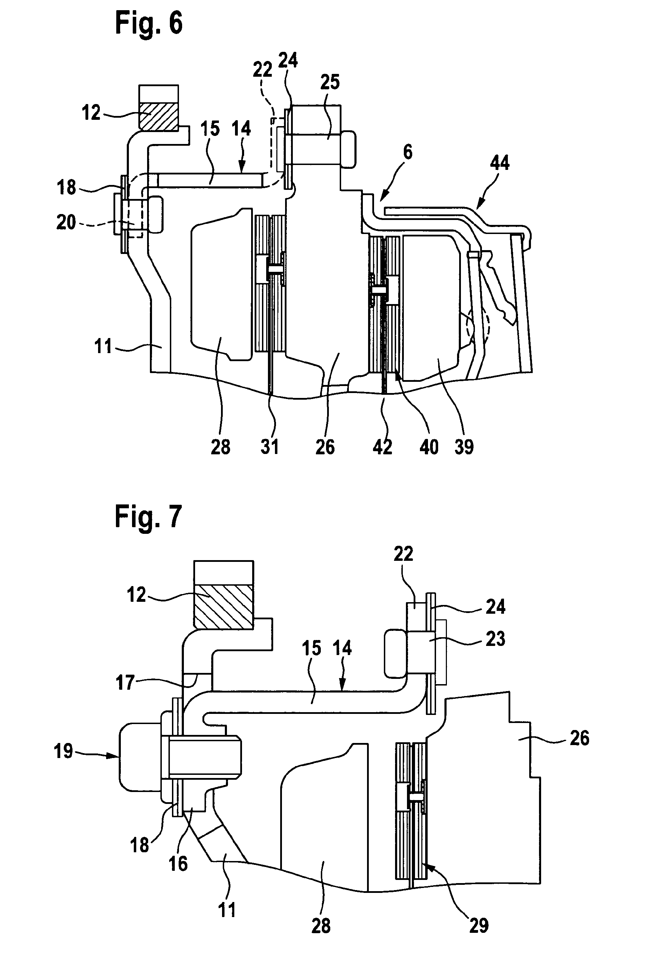

In den Figuren 6 und 7 sind Ausschnitte aus Figur 1 mit der Mittenversatzausgleichseinrichtung 14 vergrößert dargestellt. Um Wiederholungen zu vermeiden, wird auf die vorangegangene Beschreibung der Figur 1 verwiesen.

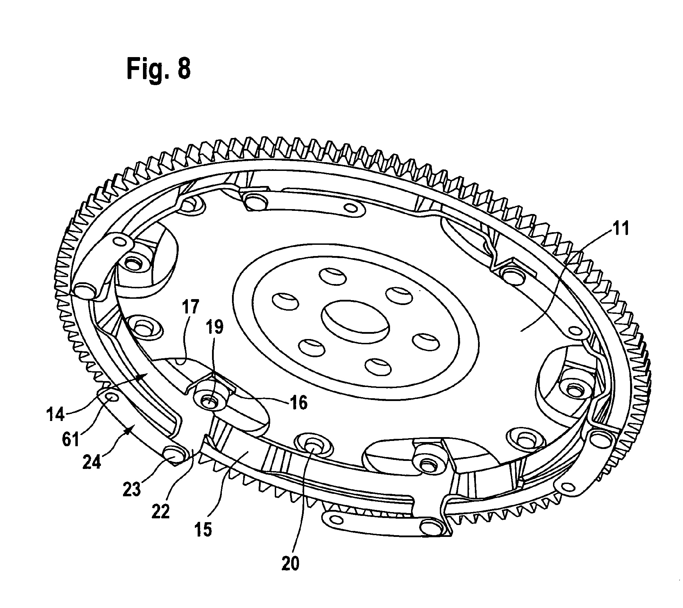

In Figur 8 ist das Ausgangsteil 11 der Antriebseinheit 3 im zusammengebauten Zustand mit der Mittenversatzausgleichseinrichtung 14 perspektivisch, von der Getriebeseite her betrachtet, dargestellt. In der Perspektive sieht man, dass die von dem Zwischenringkörper 15 radial nach innen abgewinkelte Befestigungslasche 16 im Bereich einer Ausnehmung 17 des Ausgangsteils 11 angeordnet ist. An der Befestigungslasche 22, die radial nach außen von dem Zwischenringkörper 15 abgewinkelt ist, ist mit Hilfe der Nietverbindung 23 ein Ende des Blattfederpakets 24 befestigt. In dem anderen Ende des Blattfederpakets 24 ist ein Durchgangsloch 61 ausgespart, das zur Aufnahme der Nietverbindung 25 (in Figur 1) dient, mit der das Blattfederpaket 24 an der Zwischendruckplatte 26 (in Figur 1) befestigt ist.

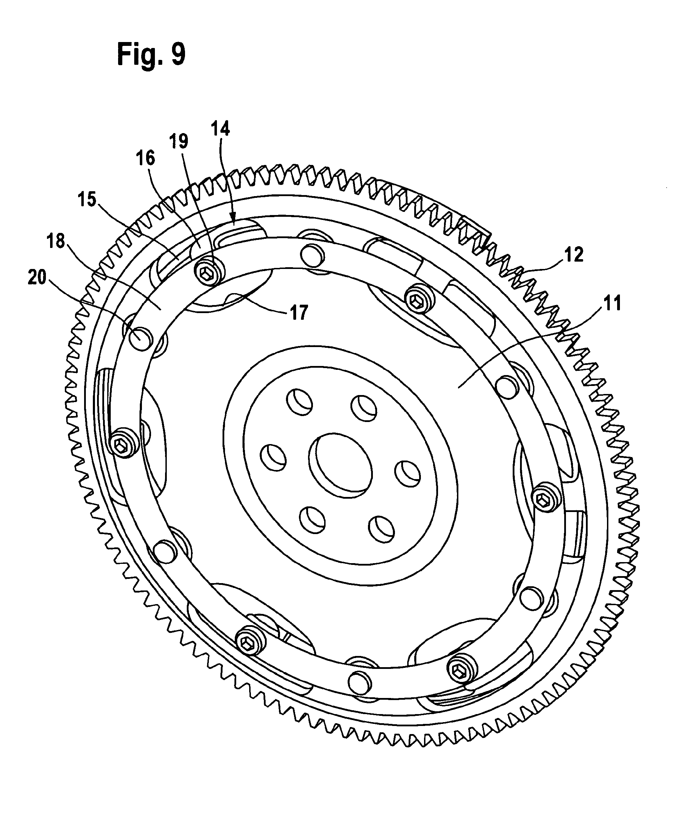

In Figur 9 ist das Ausgangsteil 11 der Antriebseinheit 3 im montierten Zustand mit der Mittenversatzausgleichseinrichtung 14 perspektivisch von der Antriebsseite her dargestellt. In der Perspektive sieht man, dass das Blattfederringpaket 18 in Umfangsrichtung alternierend an der Mittenversatzausgleichseinrichtung 14 und dem Ausgangsteil 11 befestigt ist. Die Befestigungsschrauben 19 sind von der Antriebsseite her zugänglich.

Damit die Axialsteifigkeit der Verbindung noch kleiner wird, kann anstelle des kurbelwellenseitigen Trägerblechs, das auch als Ausgangsteil 11 bezeichnet wird, auch eine übliche Flexplate verwendet werden, wie sie bei Wandlern verwendet wird. Die Doppelkupplung 6 kann sowohl auf einer der Getriebeeingangswellen als auch im Getriebegehäuse in bekannter Weise gelagert werden. Der Zwischenringkörper 15 ist vorzugsweise als Blechteil ausgebildet. In der nominellen Einbaulage haben das Blattfederringpaket 18 und das Blattfederpaket 24 keine axiale Vorspannung. Durch die erfindungsgemäße Mittenversatzausgleichseinrichtung 14 wird eine gelenkige Verbindung zum Ausgleich eines Achsversatzes zwischen der Antriebseinheit und einer im Getriebe vormontierten Doppelkupplung geschaffen.

### Bezugszeichenliste

- 1.: Antriebsstrang
- 3.: Antriebseinheit
- 4.: Kurbelwelle
- 5.: Getriebe
- 6.: Doppelkupplung
- 9.: Schraubverbindung
- 10.: Schraubverbindung
- 11.: Ausgangsteil
- 12.: Anlasserzahnkranz
- 14.: Mittenversatzausgleichseinrichtung
- 15.: Zwischenringkörper
- 16.: Befestigungslasche
- 17.: Ausnehmung
- 18.: Blattfederringpaket
- 19.: Schraube
- 20.: Nietverbindung
- 22.: Befestigungslasche
- 23.: Nietverbindung
- 24.: Blattfederpaket
- 25.: Nietverbindung
- 26.: Zwischendruckplatte
- 28.: Druckplatte
- 29.: Reibbeläge
- 31.: Kupplungsscheibe
- 33.: Nabenteil
- 35.: erste Getriebeeingangswelle
- 36.: zweite Getriebeeingangswelle
- 37.: Wälzlager
- 38.: Nabenteil
- 39.: Druckplatte
- 40.: Reibbeläge
- 42.: zweite Kupplungsscheibe
- 43.: Nabenteil
- 44.: Kupplungsgehäuse
- 46.: Betätigungseinrichtung
- 47.: Betätigungseinrichtung
- 48.: Betätigungshebel
- 49.: Betätigungshebel
- 51.: Durchgangsloch
- 54.: Rotationsachse einer Kurbelwelle
- 55.: Rotationsachse von Getriebeeingangswellen
- 61.: Durchgangsloch

## Patentansprüche

1. Drehmomentübertragungseinrichtung im Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, die drehfest mit einem Ausgangsteil (11) der Antriebseinheit (3) verbunden ist, und einem Getriebe (5) mit zwei Getriebeeingangswellen (35,36), die jeweils mit einer Reibbeläge (29,40) aufweisenden Kupplungsscheibe (31,42) einer Doppelkupplung (6) drehfest verbunden sind, wobei zwischen den Reibbelägen (29) der einen Kupplungsscheibe (31) und den Reibbelägen (40) der anderen Kupplungsscheibe (42) eine Zwischendruckplatte (26) angeordnet ist, die drehfest mit der Abtriebswelle (4) der Antriebseinheit (3) verbunden ist, **dadurch gekennzeichnet, dass** zwischen dem Ausgangsteil (11) und der Zwischendruckplatte (26) oder einem Kupplungsdeckel (44) eine Mittenversatzausgleichseinrichtung (14) angeordnet ist.

2. Drehmomentübertragungseinrichtung nach Anspruch 1, **dadurch gekennzeichnet, dass** die Mittenversatzausgleichseinrichtung (14) einen Zwischenringkörper (15) umfasst.

3. Drehmomentübertragungseinrichtung nach Anspruch 2, **dadurch gekennzeichnet, dass** mehrere Befestigungslaschen (22) von dem Zwischenringkörper (15) radial nach außen abgewinkelt sind.

4. Drehmomentübertragungseinrichtung nach Anspruch 2 oder 3, **dadurch gekennzeichnet, dass** eine Blattfedereinrichtung (24) im Wechsel an dem Zwischenringkörper (15) und an der Zwischendruckplatte (26) oder einem Kupplungsdeckel (44) befestigt ist.

5. Drehmomentübertragungseinrichtung nach Anspruch 4, **dadurch gekennzeichnet, dass** die Blattfedereinrichtung (24) mindestens einen Blattfederring umfasst.

6. Drehmomentübertragungseinrichtung nach Anspruch 4, **dadurch gekennzeichnet, dass** die Blattfedereinrichtung (24) mehrere im Wesentlichen kreisbogenförmige Blattfederelemente umfasst.

7. Drehmomentübertragungseinrichtung nach einem der Ansprüche 2 bis 6, **dadurch gekennzeichnet, dass** mehrere Befestigungslaschen (16) von dem Zwischenringkörper (15) radial nach innen abgewinkelt sind.

8. Drehmomentübertragungseinrichtung nach einem der Ansprüche 2 bis 7, **dadurch gekennzeichnet, dass** eine weitere Blattfedereinrichtung (18) im Wechsel an dem Zwischenringkörper (15) und an dem Ausgangsteil (11) befestigt ist.

9. Drehmomentübertragungseinrichtung nach Anspruch 8, **dadurch gekennzeichnet, dass** die weitere Blattfedereinrichtung (18) mindestens einen Blattfederring umfasst.

10. Drehmomentübertragungseinrichtung nach Anspruch 8, **dadurch gekennzeichnet, dass** die weitere Blattfedereinrichtung (18) mehrere im Wesentlichen kreisbogenförmige Blattfederelemente umfasst.

11. Drehmomentübertragungseinrichtung nach einem der Ansprüche 8 bis 10, **dadurch gekennzeichnet, dass** die weitere Blattfedereinrichtung (18) mit dem Zwischenringkörper (15) verschraubt ist.
